# DEMANDE DE BREVET EUROPEEN

(11) **EP 4 015 376 A1**
(43) Date de publication de la demande: **22.06.2022**
(21) Numéro de dépôt: 21203316.1
(22) Date de dépôt: 19.10.2021
(51) Int. Cl.: B64C 27/08, B64C 27/20, B64C 39/00, G05D 1/00, G01C 21/00, B64C 39/02, B64D 43/00, B64D 45/00

(54) **PROCEDE DE PILOTAGE D'UN AERONEF AYANT UNE PLURALITE DE SENSEURS DE NAVIGATION DISSIMILAIRES ET AERONEF**

(30) Priorité: 21.12.2020 FR 2013778
(71) Demandeur: Airbus Helicopters, 13725 Marignane Cedex (FR)
(72) Inventeur: THOMASSEY, Lionel, 13270 FOS SUR MER (FR)
(74) Mandataire: GPI Brevets

(57) **Abrégé**

La présente invention concerne un procédé de pilotage d'un aéronef (1) ayant une suite (30) de senseurs comprenant une pluralité de senseurs de navigation (31) dissimilaires. Ce procédé comprend les étapes suivantes: (i) détermination (STP1) d'au moins un paramètre de condition de vol variant en fonction de conditions météorologiques ou de la position de l'aéronef (1), (ii)-sélection (STP2) d'un jeu de senseurs (50) en fonction de chaque paramètre de condition de vol selon un modèle de sélection embarqué dans ledit aéronef (1), ledit jeu de senseurs (50) comprenant au moins un senseur de navigation de ladite suite (30) et générant au moins une information de pilotage, (iii) génération (STP3) avec un contrôleur de commande (20) d'au moins un signal de commande pour piloter l'aéronef (1) basé au moins sur chaque information de pilotage.

## Description

La présente invention concerne un procédé de pilotage d'un aéronef ayant une pluralité de senseurs de navigation dissimilaires, et un aéronef. En particulier, un tel aéronef peut être un giravion et/ou un aéronef sans pilote embarqué dénommé usuellement drone.

Un aéronef peut posséder un système de pilotage autonome muni d'au moins un contrôleur de vol qui contrôle des actionneurs afin de piloter la trajectoire suivie par cet aéronef. Le terme « actionneur » est à interpréter au sens large, ce terme pouvant notamment désigner tout organe apte à engendrer le déplacement ou la déformation d'un autre organe et pouvant par exemple comprendre des vérins, des servocommandes, des moteurs...

Ce système de navigation peut comprendre à cet effet de multiples senseurs sollicités pour évaluer la position de l'aéronef par rapport à l'environnement extérieur et les conditions de vol. Ces senseurs peuvent être très différents. Ces senseurs sont chacun dénommés « senseur de navigation » par commodité en raison de leur utilisation lors du pilotage de l'aéronef. Par exemple, un aéronef peut comprendre au moins un senseur de vitesse, au moins deux capteurs embarqués à ultrasons d'un système de positionnement par ultrasons, et/ou au moins une caméra monoscopique ou stéréoscopique fonctionnant dans le domaine des fréquences visibles ou infrarouges, et/ou au moins un système de télédétection d'obstacles. Un tel système de télédétection d'obstacles peut comporter un détecteur d'obstacles connu sous l'acronyme LIDAR pour la désignation en langue anglaise « Light Détection And Ranging » ou sous l'acronyme LEDDAR pour « LED Détection And Ranging » ou encore un détecteur RADAR pour « Radio Détection And Ranging ».

Un aéronef peut ainsi être piloté par un système de pilotage autonome pour décoller, atterrir ou suivre une trajectoire au regard de l'environnement, notamment en fonction des signaux émis par les divers senseurs de navigation de l'aéronef.

Toutefois, un aéronef est de fait amené à voler dans des conditions de vol et environnementales variables pouvant avoir un impact sur l'efficacité des senseurs de navigation. Par exemple, certains senseurs peuvent être peu précis en présence de brouillard ou d'un fort éclairement.

Le document US20170364095 décrit un procédé pour drone comprenant (a) la sélection d'un jeu de senseurs parmi une pluralité de senseurs pour la navigation d'un véhicule en fonction d'un ou plusieurs critères, (b) la génération d'informations de pilotage en traitant les données émises par ce jeu de senseurs, et (c) l'émission de signaux de pilotage en fonction des informations de pilotage. Par exemple, le procédé comporte les étapes suivantes : détermination d'informations de qualité porteuses de la qualité d'images prises par une pluralité de systèmes d'imagerie, sélection d'au moins un système d'imagerie parmi ladite pluralité de systèmes d'imagerie en fonction desdites informations de qualité, génération d'une information d'état à partir dudit au moins un système d'imagerie sélectionné, génération d'un signal de navigation pour contrôler le véhicule basé sur l'information d'état. Les informations de qualité sont basées sur un nombre de points caractéristiques des images capturées.

Le document CA 3 048 013 A1 décrit un aéronef muni d'un jeu principal de senseurs comprenant deux senseurs qui incluent respectivement un organe embarqué d'un système de localisation par satellites et une centrale inertielle. De plus, l'aéronef comporte un jeu complémentaire de senseurs dissimilaires des senseurs du jeu principal. Le calculateur embarqué est configuré pour calculer la précision de chaque senseur du jeu principal et du jeu complémentaire et pour générer un ordre de commande sur la base par défaut de premières mesures réalisées par le jeu principal de senseurs et d'au moins d'une deuxième mesure réalisée par le jeu complémentaire de senseurs en cas de meilleures précisions de la deuxième mesure par rapport aux premières mesures.

Le document WO201863500 est éloigné de la problématique de l'invention et décrit un procédé pour ajuster une trajectoire de vol d'un drone en fonction de données météorologiques. Un exemple d'appareil va notamment effectuer un pilotage, par l'intermédiaire d'un processeur d'un drone, selon une trajectoire de vol ; intercepter, par l'intermédiaire du processeur du drone, des données météorologiques identifiées par une source météorologique au sein d'un périmètre limite autour de la trajectoire de vol; et, lorsque les données météorologiques correspondent à des données météorologiques indésirables, ajuster, par l'intermédiaire du processeur du drone, la trajectoire de vol afin d'éviter une région correspondant à la source météorologique.

La présente invention a alors pour objet de proposer un procédé innovant pour le pilotage d'un aéronef en fonction de l'environnement et des conditions de vol.

Notamment, l'invention concerne un procédé de pilotage d'un aéronef ayant une suite de senseurs comprenant une pluralité de senseurs de navigation dissimilaires.

Le procédé peut comporter une phase de pilotage comprenant les étapes suivantes :
- détermination d'au moins un paramètre de condition de vol variant en fonction de conditions météorologiques, voire ou de la position de l'aéronef, ledit au moins un paramètre de condition de vol étant distinct d'une information relative à une qualité d'une image,
- sélection d'un jeu de senseurs en fonction de chaque paramètre de condition de vol dudit au moins un paramètre de condition de vol selon un modèle de sélection embarqué dans ledit aéronef, ledit jeu de senseurs comprenant au moins un senseur de navigation de ladite suite de senseurs, ledit jeu de senseurs générant au moins une information de pilotage,
- génération avec un contrôleur de commande d'au moins un signal de commande pour piloter l'aéronef, ledit au moins un signal de commande étant basé au moins sur chaque information de pilotage de ladite au moins une information de pilotage.

Le terme « dissimilaires » signifie que la pluralité de senseurs de navigation comporte des senseurs mesurant un même paramètre mais selon des techniques différentes, et non pas seulement des senseurs identiques redondés. Par exemple, la pluralité de senseurs de navigation comporte au moins une caméra, au moins un RADAR et au moins un LIDAR ou LEDDAR, chacun de ces senseurs pouvant servir à détecter un objet dans l'environnement. Selon un autre exemple, la pluralité de senseurs de navigation comporte un senseur à tube de Pitot et un senseur de navigation par satellites pour évaluer une vitesse de l'aéronef.

L'expression « en fonction de chaque paramètre de condition de vol dudit au moins un paramètre de condition de vol » signifie qu'en présence d'un unique paramètre de condition de vol le modèle prend notamment en compte un unique paramètre de condition de vol, et qu'en présence de plusieurs paramètres de condition de vol le modèle les prend tous en considération. Le terme « chaque » peut ainsi désigner un seul paramètre le cas échéant.

Il en va de même dans des expressions utilisées par la suite.

Notamment, l'expression « chaque information de pilotage de ladite au moins une information de pilotage » signifie qu'en présence d'une unique information de pilotage le contrôleur de commande prend en compte de fait une unique information de pilotage, et qu'en présence de plusieurs informations de pilotage le contrôleur de commande les prend toutes en considération.

Par ailleurs, le jeu de senseurs sélectionné peut comprendre un ou plusieurs senseurs. Eventuellement, un jeu de senseurs peut comprendre des senseurs dits de même nature mesurant le même paramètre de navigation. Les données émises par ces senseurs de même nature sont alors fusionnées, par exemple par application d'un filtre de Kalman, pour obtenir une valeur de ce paramètre de navigation plus robuste. Selon une illustration, deux senseurs dissimilaires d'un même jeu de senseurs évaluent chacun la vitesse de l'aéronef, un filtre de Kalman fusionnant les deux vitesses évaluées pour en déduire une valeur de vitesse robuste.

Un aéronef peut comprendre de nombreux capteurs pour appréhender son environnement proche ou lointain et sa position. Cependant, les capteurs ont de fait tous leur propre domaine de fonctionnement optimal. En fonction de la situation et notamment des conditions environnementales, la précision d'un capteur peut être plus ou moins élevée. Les temps de traitement des capteurs étant aussi de fait différents, un capteur peut être plus ou moins efficace en fonction de la vitesse de déplacement de l'aéronef.

Le procédé comporte ainsi à chaque itération une première étape pour notamment évaluer les conditions de vol courantes. Ces conditions de vol peuvent comprendre des conditions météorologiques, telles que par exemple un fort ensoleillement, des conditions de pénombre, la présence de pluie, la présence de brouillard... Ces conditions de vol peuvent comprendre des conditions de positionnement, telles que l'orientation, la position ou la vitesse de l'aéronef.

Les paramètres de condition de vol ne comprennent pas la qualité d'une image, évaluée par exemple avec un nombre de points caractéristiques, contrairement au document US20170364095. La première étape du procédé vise alors à évaluer la situation de l'aéronef au regard de l'environnement.

Durant une deuxième étape, le procédé prévoit de sélectionner le jeu de senseurs le plus approprié, par exemple parmi plusieurs jeux de senseurs mémorisés, au regard notamment de ces conditions de vol et d'un modèle prédéterminé. Ainsi, le pilotage de l'aéronef est ensuite réalisé en utilisant le jeu de senseurs le plus performant au regard de la situation courante, voire d'autres senseurs immuables. Par exemple, le modèle mémorise des jeux de senseurs à utiliser respectivement pour diverses situations de de vol.

Par exemple, les obstacles entourant un aéronef peuvent être appréhendés en utilisant une caméra ou un RADAR. Une caméra fonctionnant dans le domaine des fréquences visibles présente l'avantage de pouvoir détecter de multiples objets mais s'avère moins performante en présence d'un fort ensoleillement, alors qu'un RADAR identifie plus difficilement des objets rapprochés. Ainsi, le procédé peut selon cet exemple permettre d'utiliser un jeu de senseurs comprenant le RADAR en présence d'un fort ensoleillement, et un jeu de senseurs comprenant une caméra dans la négative.

Ce procédé peut donc permettre d'appréhender, de qualifier, et de quantifier l'environnement de vol à un instant donné afin de choisir le ou les senseurs les plus adaptés à cet instant donné pour piloter l'aéronef.

Le procédé peut de plus comporter une ou plusieurs des caractéristiques qui suivent.

Selon une possibilité, ladite détermination d'au moins un paramètre de condition de vol peut comporter au moins une des étapes suivantes : mesure d'une luminance d'un environnement de l'aéronef, mesure d'un éclairement lumineux dudit environnement, évaluation d'une intensité lumineuse dudit environnement, détermination d'un contraste d'un objet d'un environnement de l'aéronef par rapport à un fond, mesure d'une distance entre l'aéronef et un objet dudit environnement.

Le contraste peut en effet permettre d'identifier la présence de brouillard par exemple. Eventuellement, une caméra peut prendre une série d'images, le contrôleur de commande analysant les images pour déterminer ledit contraste selon des techniques connues.

La luminance ou l'éclairement lumineux peuvent permettre de déterminer la présence éventuelle d'un fort ensoleillement. La distance entre l'aéronef et un objet peut conditionner le cas échéant l'utilisation d'un système de détection d'obstacles particulier, et par exemple un senseur à temps de traitement rapide en présence d'une grande vitesse d'avancement de l'aéronef.

Selon une possibilité compatible avec la précédente, ladite détermination d'au moins un paramètre de condition de vol peut comporter les étapes suivantes : mesure d'un éclairement lumineux d'un environnement de l'aéronef, détermination d'un contraste dudit environnement par rapport à un fond, et mesure d'une distance entre l'aéronef et un objet dudit environnement.

Cette combinaison de mesure peut être intéressante pour déterminer le jeu de senseurs en fonction de l'éclairement lumineux de l'environnement et de la distance entre un obstacle et l'aéronef.

Selon une possibilité compatible avec les précédentes, ladite détermination d'au moins un paramètre de condition de vol peut comporter une étape de détermination d'au moins un paramètre de vol de l'aéronef ou de la position de l'aéronef, ladite sélection d'un jeu de senseurs étant réalisée en fonction dudit au moins un paramètre de vol ou de la position de l'aéronef.

Outre des conditions météorologiques, des paramètres de vol images du comportement de l'aéronef dans l'espace peuvent influencer le choix du jeu de senseurs.

Par exemple, ledit au moins un paramètre de vol peut comporter une vitesse de déplacement de l'aéronef.

Par exemple, une telle vitesse de déplacement est une vitesse air.

A titre illustratif, à grande vitesse de déplacement de l'aéronef, le procédé peut permettre de sélectionner un jeu de senseurs muni de senseurs fournissant rapidement les informations requises pour optimiser le pilotage et éviter un incident. A faible vitesse de déplacement de l'aéronef, le jeu de senseurs sélectionné peut avoir des senseurs nécessitant un temps de traitement plus long, ces senseurs pouvant être plus précis dans le cas courant éventuellement.

Selon une possibilité compatible avec les précédentes, le modèle de sélection peut appliquer une étape de sélection par logique floue.

Par exemple, chaque paramètre de condition de vol peut présenter des valeurs appartenant à plusieurs catégories. Le modèle de sélection peut alors mémoriser, pour chaque paramètre de condition de vol, des lois fournissant pour chaque catégorie un niveau d'appartenance, entre 0% et 100%, en fonction de la valeur du paramètre de condition de vol.

De plus, le modèle de sélection mémorise une pluralité de règles. Chaque règle désigne un ensemble de senseurs en fonction d'au moins une catégorie d'au moins un paramètre de condition de vol voire d'opérateurs logiques. Un ensemble de senseurs comprend au moins un senseur de navigation de ladite suite de senseurs.

Selon un exemple simple, la vitesse de déplacement de l'aéronef peut être faible, moyenne ou élevée en fonction de sa valeur. Une règle peut indiquer qu'il faut un premier ensemble de senseurs si la vitesse est faible ou moyenne, et une autre règle peut indiquer qu'il faut un deuxième ensemble de senseurs si la vitesse est élevée.

Par exemple, ladite étape de sélection par logique floue peut comporter les étapes suivantes :
- détermination, pour chaque paramètre de condition de vol dudit au moins un paramètre de condition de vol, d'au moins un niveau d'appartenance à une catégorie associée à ce paramètre de condition de vol,
- détermination d'un niveau de pondération d'une pluralité de règles, chaque règle associant un ensemble de senseurs comprenant au moins un senseur de navigation de ladite suite de senseurs et au moins un niveau d'appartenance à une dite catégorie,
- détermination du jeu de senseurs, ledit jeu de senseurs étant l'ensemble de senseurs associé à la règle ayant le plus haut niveau de pondération.

L'expression «d'au moins un niveau d'appartenance à une catégorie associée à ce paramètre de condition de vol» signifie que pour chaque catégorie d'un paramètre de condition de vol un niveau d'appartenance est déterminé.

Selon une possibilité, un paramètre de condition de vol peut être mesuré par un senseur immuable, à savoir présent dans tous les jeux de senseurs possibles ou ne faisant pas partie de la suite de senseurs.

Selon une possibilité compatible avec les précédentes, ledit au moins un paramètre de condition de vol pouvant être mesuré par une pluralité de senseurs dissimilaires de ladite pluralité de senseurs de navigation, ladite détermination d'au moins un paramètre de condition de vol est réalisée en sollicitant le jeu de senseurs en vigueur.

Selon cette possibilité, à chaque instant, l'aéronef exploite un jeu de senseurs. Ce jeu de senseurs en vigueur peut être sollicité pour déterminer la valeur d'au moins un paramètre de condition de vol.

Selon une autre possibilité, au démarrage, l'aéronef peut exploiter un jeu de senseurs par défaut.

Selon une autre possibilité, au démarrage, le contrôleur de commande analyse les données transmises par tous les senseurs de navigation et détermine les senseurs les plus précis, par exemple au regard de seuils d'interprétation. Par exemple, un senseur fournissant une valeur sensiblement constante pendant un temps donné peut être considéré comme étant fiable et utilisable. Le contrôleur peut aussi fusionner des mesures diverses d'un même paramètre. Le contrôleur de commande met alors en œuvre le procédé selon l'invention.

L'invention vise aussi un aéronef muni d'une suite de senseurs ayant une pluralité de senseurs de navigation dissimilaires.

Cet aéronef comporte un contrôleur de commande configuré pour appliquer le procédé précédent, ledit contrôleur de commande étant configuré pour :
- déterminer une valeur courante d'au moins un paramètre de condition de vol,
- sélectionner un jeu de senseurs comprenant au moins un senseur de navigation de ladite suite de senseurs de navigation en fonction de chaque paramètre de condition de vol dudit au moins un paramètre de condition de vol selon un modèle de sélection embarqué dans ledit aéronef, ledit jeu de senseurs générant au moins une information de pilotage,
- générer au moins un signal de commande pour piloter l'aéronef basé au moins sur chaque information de pilotage de ladite au moins une information de pilotage.

Par exemple, le contrôleur de commande peut comprendre une unité centralisée, telle qu'une partie d'un contrôleur de vol d'un drone par exemple.

Selon un autre exemple, l'aéronef peut comprendre un système déporté et redondé. Par exemple, le contrôleur de commande peut comprendre une unité associée à chaque senseur de navigation. Chaque unité reçoit des informations de tous les senseurs et met en œuvre le procédé. L'unité associée à un des senseurs du jeu de senseurs sélectionné peut alors prendre le contrôle de l'aéronef. Cette unité devient une unité maître et en informe les autres unités. L'unité maître génère alors le ou les signaux de commande.

Selon une possibilité, ladite pluralité de senseurs de navigation peut comporter au moins des organes suivants : une caméra fonctionnant dans le domaine des fréquences visibles, une caméra fonctionnant dans le domaine des fréquences infrarouges, un système de mesure d'une vitesse de l'aéronef par rapport à l'air, un système de télédétection d'un obstacle, un système de positionnement par ultrasons, un capteur d'éclairement lumineux.

En particulier, l'aéronef peut avoir un ou plusieurs des systèmes de télédétection d'un obstacle suivant : un RADAR, un LIDAR, un LEDDAR.

L'aéronef peut comporter un RADAR météorologique.

Selon une possibilité compatible avec les précédentes, ledit aéronef comporte au moins un groupe motorisé, ledit au moins un groupe motorisé comprenant au moins un moteur mettant en rotation au moins un rotor, ledit contrôleur de commande transmet ledit au moins un signal de commande à un contrôleur de vitesse électronique dudit au moins un moteur.

L'invention et ses avantages apparaîtront avec plus de détails dans le cadre de la description qui suit avec des exemples donnés à titre illustratif en référence aux figures annexées qui représentent :
la figure 1, un aéronef selon l'invention,
la figure 2, un logigramme présentant des étapes du procédé selon l'invention,
la figure 3, un schéma illustrant le changement du jeu de senseurs sélectionné en vol,
la figure 4, un diagramme présentant un niveau d'appartenance par rapport à une distance,
la figure 5, un diagramme présentant un niveau d'appartenance par rapport à une vitesse,
la figure 6, un diagramme présentant un niveau d'appartenance par rapport à un éclairement,
la figure 7, un diagramme présentant un niveau d'appartenance par rapport à un contraste, et
la figure 8, un exemple de tableau de décision.

Les éléments présents dans plusieurs figures distinctes sont affectés d'une seule et même référence, sauf indications contraires.

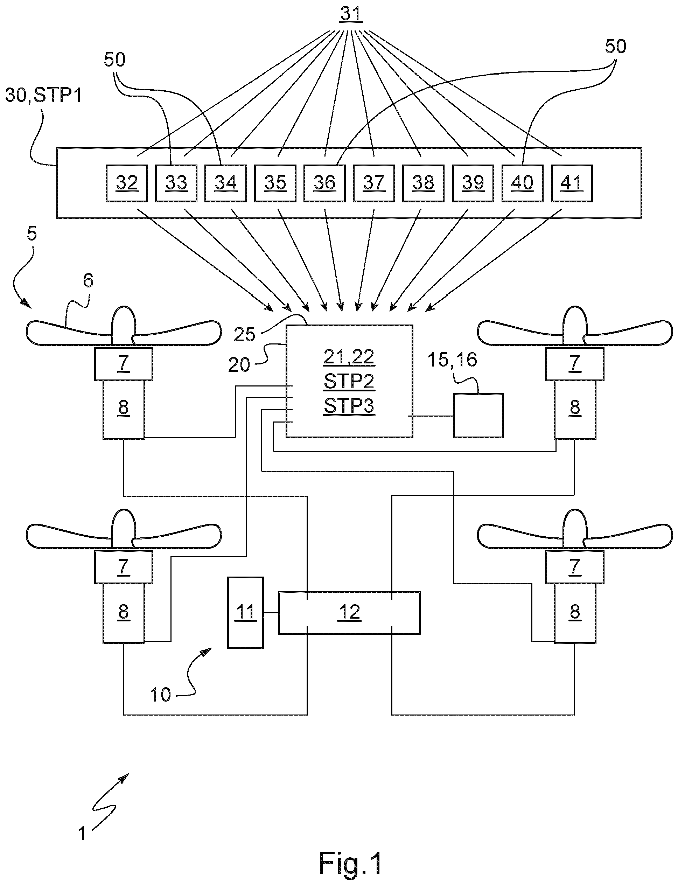

La figure 1 présente un aéronef 1 selon l'invention apte à appliquer le procédé de l'invention.

Cet aéronef 1 peut comporter au moins un groupe motorisé 5 participant au déplacement de l'aéronef 1 dans l'espace. Par exemple, chaque groupe motorisé est porté par une cellule non représentée pour ne pas alourdir la figure.

Un tel groupe motorisé 5 est par exemple muni d'un rotor 6 comprenant une pluralité de pales mises en rotation par au moins un moteur 7, via éventuellement une chaîne de transmission de puissance. Selon d'autres possibilités un groupe motorisé 5 comporte un réacteur ou équivalent par exemple.

En particulier la figure 1 décrit un aéronef qui comporte au moins un groupe motorisé 5 comprenant au moins un moteur 7 muni d'un contrôleur de vitesse électronique 8, ce moteur 7 mettant en rotation au moins un rotor 6. Selon un autre exemple, un groupe motorisé peut par exemple comprendre deux moteurs entraînant respectivement deux rotors, un moteur entraînant deux rotors...

Selon une possibilité, un moteur 7 peut être un moteur électrique, le contrôleur de vitesse électronique 8 étant alimenté par un système de distribution d'énergie 10. Un tel système de distribution d'énergie 10 peut comprendre une source d'énergie électrique 11, par exemple une batterie électrique ou autres. Par exemple, la source d'énergie électrique 11 alimente électriquement une carte de distribution 12 reliée électriquement à chaque contrôleur de vitesse électronique 8.

En outre, la figure 1 illustre un aéronef 1 de type quadrirotor muni de quatre groupes motorisés 5 à un rotor 6 chacun. Il s'agit d'un exemple, l'aéronef 1 pouvant être un giravion ayant d'autres formes voire pouvant être un aéronef d'un autre type. Par exemple, l'aéronef 1 peut être un hélicoptère.

De même, l'aéronef 1 illustré est un drone mais pourrait aussi comprendre un pilote humain embarqué et des moyens de pilotage manœuvrables par ce pilote humain.

Les exemples précédents sont donnés à titre illustratif, le terme « aéronef » étant à interpréter au sens large.

Quelles que soient les natures de l'aéronef et du ou des groupes motorisés, l'aéronef 1 comporte un système participant au pilotage de l'aéronef 1. Ce système peut être autonome ou peut transmettre des signaux de commande exploités par un pilote humain.

Ce système comporte un contrôleur dénommé contrôleur de commande 20 par commodité. Ce contrôleur de commande 20 est configuré pour émettre au moins un signal de commande afin de participer au pilotage de l'aéronef 1. Par exemple, ce signal de commande transmet des informations de pilotage à un pilote humain. Selon l'exemple de la figure 1, le contrôleur de commande 20 transmet des signaux de commande respectivement aux contrôleurs de vitesse électronique 8 pour piloter la vitesse de rotation de chaque rotor 6. Ce contrôleur de commande 20 peut être autonome et/ou peut recevoir des instructions données à distance par une antenne 16 ou par des commandes 15 manœuvrées par un pilote humain.

Le contrôleur de commande 20 peut comprendre une unité de traitement 25 centralisée selon l'exemple de la figure 1, ou plusieurs unités de traitement 25 communiquant éventuellement entre elles. La ou les unités de traitement 25 sont reliées à chaque groupe motorisé, et/ou le cas échéant à chaque organe participant au pilotage. Un tel organe peut prendre la forme d'un contrôleur de vitesse électronique 8, d'un actionneur pilotant un volet ou le pas de pales par exemple ou autres, d'un indicateur fournissant une valeur d'un paramètre ou affichant au moins un symbole pour participer au pilotage tel qu'un symbole représentant un obstacle à éviter sur un écran...

La ou les unités de traitement 25 peuvent comprendre par exemple au moins un processeur 21 et au moins une mémoire 22, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Pour élaborer le ou les signaux de commande, le contrôleur de commande 20 coopère au moins avec une suite de senseurs 30 ayant une pluralité de senseurs de navigation 31. Le contrôleur de commande 20 coopère avec des senseurs de conditions de vol, ces senseurs pouvant faire partie ou non de ladite suite de senseurs 30.

Le terme « senseur » est à interpréter au sens large en désignant un système générant un signal numérique ou analogique image d'un paramètre, par exemple un signal électrique présentant une tension électrique image d'une température ou autres. Un senseur peut ainsi comprendre au moins un organe de mesure qui génère un signal de mesure, voire au moins un organe de traitement qui génère un signal de mesure. Le contrôleur de commande 20 peut déterminer la valeur d'un paramètre en recevant un signal, par exemple numérique, directement porteur de cette valeur ou en décodant un signal analogique par exemple.

Selon l'exemple illustré, au moins une unité de traitement 25 est reliée à chaque senseur de navigation 31. Selon un autre exemple, le contrôleur de commande 20 comporte au moins une unité de traitement 25 déportée, éventuellement associée à un senseur de navigation 31. Selon un exemple, chaque senseur de navigation 31 comporte une unité de traitement 25 du contrôleur de commande 20. La référence 31 est affectée par la suite à chaque senseur de navigation, chaque senseur de navigation ayant de plus sa propre référence.

Par exemple, la pluralité de senseurs de navigation comporte un ou plusieurs des senseurs décrits ci-après.

Ainsi la pluralité de senseurs de navigation peut comporter une caméra 32, stéréoscopique ou non, fonctionnant dans le domaine des fréquences visibles.

La pluralité de senseurs de navigation peut comporter une caméra 33 fonctionnant dans le domaine des fréquences infrarouges.

La pluralité de senseurs de navigation peut comporter un système 34, 35 de mesure d'une vitesse de l'aéronef par rapport à l'air. Un tel système peut par exemple comprendre un senseur 34 à tube de Pitot et/ou un senseur 35 de navigation par satellites, et /ou un autre type de senseur usuel.

La pluralité de senseurs de navigation peut comporter un système 36, 37, 38 de télédétection d'un obstacle. Un tel système peut comporter par exemple un RADAR 36 et/ou un LIDAR 37 et/ou un LEDDAR 38.

La pluralité de senseurs de navigation peut comporter un système 39 de positionnement par ultrasons.

La pluralité de senseurs de navigation peut comporter un capteur d'éclairement lumineux 40. Par exemple, un tel capteur peut comporter un transducteur optoélectronique inséré dans une cellule photoélectrique.

La pluralité de senseurs de navigation peut comporter un capteur de pluie, un capteur de givre, un RADAR météorologique, une centrale inertielle...

Indépendamment des aspects et des exemples précédemment décrits, le contrôleur de commande 20 est configuré pour appliquer le procédé de l'invention en participant au pilotage de l'aéronef 1 en utilisant à chaque instant du procédé appliqué le ou les senseurs d'un jeu de senseurs 50 sélectionné. Le jeu de senseurs 50 sélectionné à chaque instant est choisi parmi une liste de jeux de senseurs mémorisés. Chaque jeu de senseurs comporte un ou plusieurs senseurs de navigation 31. Le jeu de senseurs 50 sélectionné est alors le jeu de senseurs mémorisé jugé par le contrôleur de commande 20 comme étant le plus pertinent au point de vol courant. Certains senseurs peuvent être présents dans un, plusieurs voire tous les jeux de senseurs possibles.

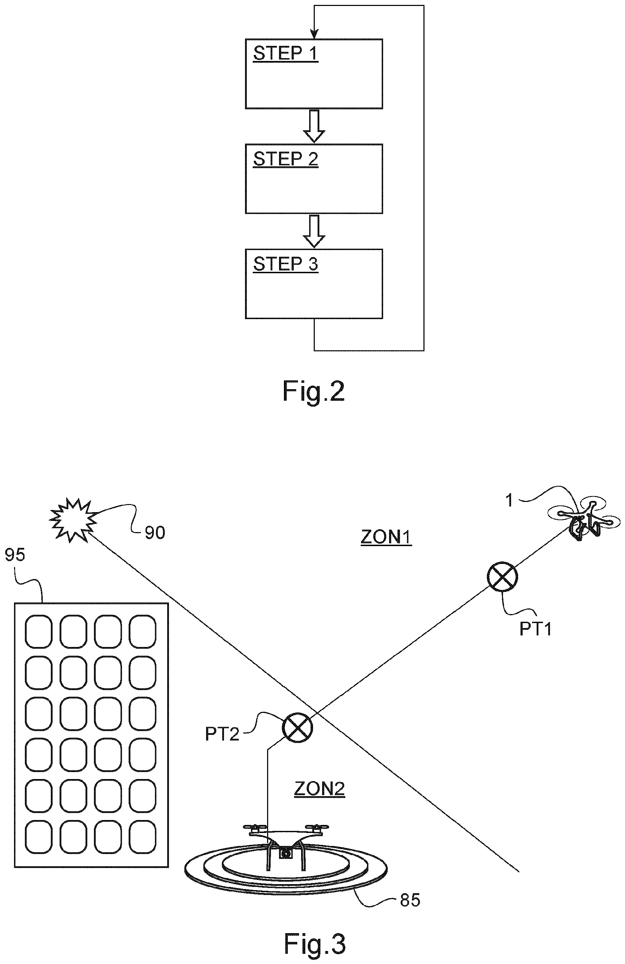

La figure 2 illustre le procédé de l'invention.

Chacun des senseurs de navigation 31 émet un signal porteur d'informations relatives à des conditions météorologiques ou à la position de l'aéronef 1, et par exemple relatives à un contraste de saturation (image de la luminosité),.... Au moins un senseur de navigation émet un signal porteur d'informations relatives à des conditions météorologiques, à savoir variant en fonction des conditions météorologiques.

Chacune de ces informations est pointée dans un diagramme d'appartenance correspondant, comme pour les autres critères, dans une phase dite de « fuzzification » ou de « floutage ». Grace à un modèle comprenant par exemple un tableau ou une matrice ou un tesseract de lois ou autres, le procédé permet de choisir en sortie le senseur ou le jeu de senseurs sur lequel il faut basculer.

Ce procédé comporte ainsi les étapes STP1, STP2, STP3 suivantes réalisées de manière itérative.

Ainsi, le procédé comporte une étape de détermination STP1 d'au moins un paramètre de condition de vol variant en fonction de conditions météorologiques, voire de la position de l'aéronef 1. Le ou les paramètres de condition de vol ne sont donc pas relatifs à une information relative à la qualité d'une image.

Des senseurs de condition de vol peuvent être utilisés à cet effet. Le contrôleur de commande 20 détermine alors la valeur courante de chaque paramètre de condition de vol en recevant un signal de mesure porteur de cette valeur, voire en décodant ce signal de mesure.

Ainsi, les senseurs de navigation 31 ou d'autres senseurs de condition de vol peuvent être aussi utilisés à cet effet en tant que senseur de condition de vol.

En vol, le jeu de senseurs en vigueur peut mesurer un ou des paramètres de condition de vol. Au démarrage, si un paramètre de condition de vol est mesuré par des senseurs dissimilaires répartis dans divers jeux de senseurs mémorisés, le contrôleur de commande 20 peut solliciter un jeu de senseurs par défaut ou encore peut utiliser les senseurs lui semblant les plus adéquats au regard de critères prédéterminés.

Ainsi, durant cette étape de détermination STP1 d'au moins un paramètre de condition de vol, un ou des senseurs, et le cas échéant ceux d'un jeu de senseurs 50 sélectionné en vigueur, transmettent chacun un signal de mesure au contrôleur de commande 20, ce signal de mesure étant porteur d'une valeur du paramètre de condition de vol associé.

Le contrôleur de commande 20 reçoit, voire décode, chaque signal de mesure reçu pour en déduire la valeur du paramètre de condition de vol associé.

Par exemple, le procédé peut prévoir au moins une des étapes de mesure suivantes.

Dès lors, l'étape de détermination STP1 d'au moins un paramètre de condition de vol peut comporter la mesure d'une luminance d'un environnement de l'aéronef 1. Cette luminance peut prendre la forme d'une luminance exprimée en candela par mètre carré ou d'une luminance énergétique ou radiance exprimée en Watt par mètre carré par stéradian. La luminance peut être mesurée à l'aide d'un luminancemètre par exemple, appartenant ou n'appartenant pas à la suite de senseurs.

L'étape de détermination STP1 d'au moins un paramètre de condition de vol peut comporter la mesure d'un éclairement lumineux dudit environnement, par exemple à l'aide du capteur d'éclairement lumineux 40.

L'étape de détermination STP1 d'au moins un paramètre de condition de vol peut comporter une évaluation d'une intensité lumineuse dudit environnement selon une méthode connue et avec des moyens connus.

L'étape de détermination STP1 d'au moins un paramètre de condition de vol peut comporter la détermination d'un contraste d'un objet dudit environnement par rapport à un fond. Par exemple, la caméra 32 peut prendre une série d'images, le contrôleur de commande 20 analysant les images pour déterminer ledit contraste selon des techniques connues.

L'étape de détermination STP1 d'au moins un paramètre de condition de vol peut comporter la mesure d'une distance entre l'aéronef 1 et, tel que représenté à la figure 3, un objet 95 dudit environnement, par exemple à l'aide d'un système 36, 37, 38 de télédétection d'un obstacle.

Selon un exemple particulier, les mesures suivantes sont réalisées : mesure d'un éclairement lumineux d'un environnement de l'aéronef 1, détermination d'un contraste dudit environnement par rapport à un fond, et mesure d'une distance entre l'aéronef 1 et un objet 95 dudit environnement.

En outre, la détermination d'au moins un paramètre de condition de vol peut comporter une étape de détermination d'au moins un paramètre de vol de l'aéronef 1.

L'étape de détermination STP1 d'au moins un paramètre de condition de vol peut alors comporter la mesure d'une vitesse de déplacement de l'aéronef 1 à l'aide d'un système 34, 35 de mesure d'une vitesse.

L'étape de détermination STP1 d'au moins un paramètre de condition de vol peut comporter la mesure d'un angle d'assiette, par exemple à l'aide d'une centrale inertielle.

Indépendamment des diverses combinaisons possibles, le procédé comporte une étape de sélection STP2 d'un jeu de senseurs 50 pouvant être qualifié de jeu de senseurs sélectionné parmi tous les jeux de senseurs mémorisés.

Le jeu de senseurs 50 sélectionné est sélectionné par le contrôleur de commande 20 en fonction au moins de la valeur courante du ou des paramètres de condition de vol selon un modèle de sélection embarqué.

Par exemple, le contrôleur de commande 20 applique une méthode de logique floue durant une étape de sélection par logique floue.

Ce modèle de logique floue comporte des lois appliqués par le contrôleur de commande et fournissant pour chaque paramètre de condition de vol un niveau d'appartenance à une catégorie en fonction de la valeur de ce paramètre de condition de vol.

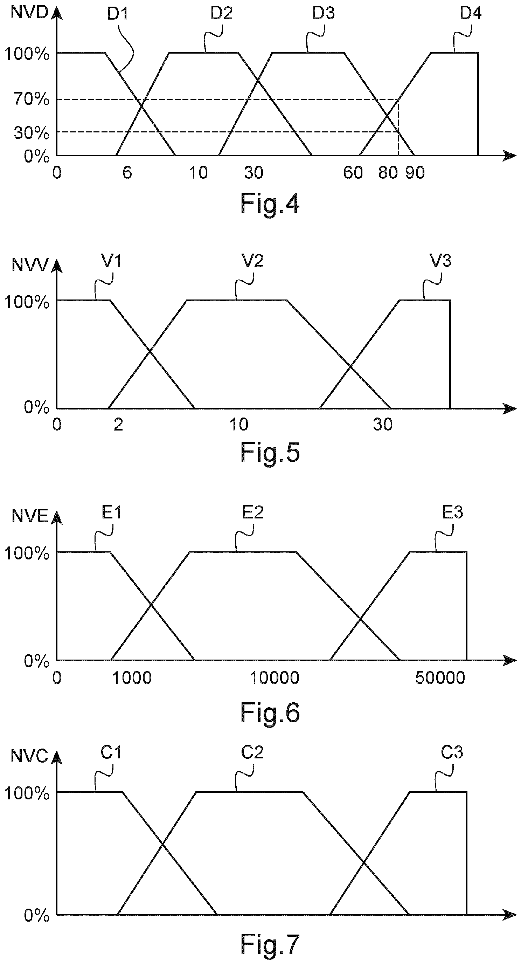

Les figures 4 à 7 illustrent des exemples pour divers paramètres de condition de vol au travers de diagrammes présentant en ordonnée un niveau d'appartenance et en abscisse la valeur du paramètre de condition de vol.

En particulier, selon la figure 4 un paramètre de condition de vol peut être une distance par rapport à un obstacle. Des lois D1, D2, D3, D4 fournissent un niveau d'appartenance NVD en fonction respectivement des catégories suivantes : distance très faible, distance faible, distance moyenne et distance élevée.

A titre illustratif, si la distance mesurée est égale à 80 mètres, le contrôleur de commande détermine la présence à 70% d'une distance élevée selon la loi D4 et à 30 % d'une distance moyenne selon la loi D3.

Selon la figure 5, un paramètre de condition de vol peut être une vitesse d'avancement. Des lois V1, V2, V3 fournissent un niveau d'appartenance NVV en fonction respectivement des catégories suivantes : vitesse faible, vitesse moyenne et vitesse élevée.

Selon la figure 6, un paramètre de condition de vol peut être un éclairement. Des lois E1, E2, E3 fournissent un niveau d'appartenance NVE en fonction respectivement des catégories suivantes : éclairement faible, éclairement moyen et éclairement élevé.

Selon la figure 7, un paramètre de condition de vol peut être un contraste. Des lois C1, C2, C3 fournissent un niveau d'appartenance NVC en fonction respectivement des catégories suivantes : contraste faible, contraste moyen et contraste élevé.

Bien évidemment, d'autres paramètres de condition de vol et/ou d'autres catégories peuvent être utilisés.

L'étape de logique floue comporte ensuite une étape de détermination d'un niveau de pondération de chaque règle d'une pluralité de règles.

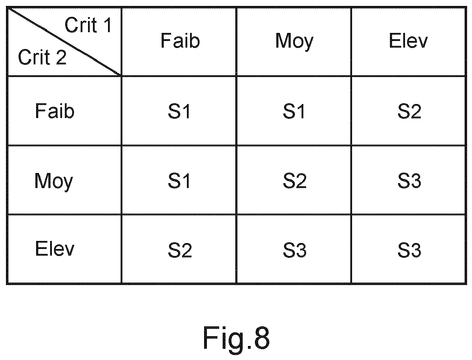

En présence de deux paramètres de condition de vol, ces règles peuvent être établies à partir d'un tableau de décision à deux critères. La figure 8 illustre un tableau de décision à deux critères crit1, crit2, associés chacun à des valeurs faibles Faib, moyenne Moy et élevées Elev, pour sélectionner le jeu de senseurs à utiliser S1, S2, S3.

Selon l'exemple de la figure 8, une première règle peut indiquer d'utiliser un premier jeu de senseurs S1 si le premier critère crit1 est faible et si le deuxième critère crit2 est faible ou si le premier critère crit1 est moyen et si le deuxième critère crit2 est faible ou si le premier critère crit 1 est faible et si le deuxième critère crit2 est moyen. Une deuxième règle peut indiquer d'utiliser un deuxième jeu de senseurs S2 si le premier critère crit1 est faible et si le deuxième critère crit2 est élevé ou si le premier critère crit1 est moyen et si le deuxième critère crit2 est moyen ou si le premier critère crit1 est élevé et si le deuxième critère crit2 est faible. Une troisième règle peut indiquer d'utiliser un troisième jeu de senseurs S3 si le premier critère crit1 est moyen et si le deuxième critère crit2 est élevé ou si le premier critère crit1 est élevé et si le deuxième critère crit2 est moyen ou si le premier critère crit1 est élevé et si le deuxième critère crit2 est élevé.

En présence de trois paramètres de condition de vol, ces règles peuvent être établies à partir d'un cube de décision à trois critères. En présence de quatre paramètres de condition de vol, ces règles peuvent être établies à partir d'un tesseract de décision à quatre critères...

Selon un exemple donné à titre illustratif, une première règle peut indiquer qu'un premier ensemble de senseurs doit être utilisé si la vitesse d'avancement est faible ou, si la distance est grande et si l'éclairement est faible, ou si le contraste est moyen. Une deuxième règle peut associer un deuxième ensemble de senseurs à d'autres combinaisons.

Dès lors, durant une étape d'interférence du procédé de logique floue le contrôleur de commande associe chaque règle à un niveau de pondération calculé à partir des opérateurs logiques et des niveaux d'appartenance.

Durant une étape dite de « défuzzification », le contrôleur de commande 20 sélectionne le jeu de senseurs à utiliser pour le pilotage, ce jeu de senseurs étant l'ensemble de senseurs associé à la règle ayant le plus haut niveau de pondération.

Par exemple, une première règle permet d'assigner une valeur de 80% au niveau de pondération pour le premier ensemble de senseurs et une deuxième règle conduit à un niveau de pondération de 20% pour un deuxième ensemble de senseurs. Le premier ensemble de senseurs devient alors le jeu de senseurs à utiliser.

On se référera à la littérature pour comprendre comment interpréter les opérateurs logiques « et », « ou » et autres, et comment appliquer une méthode de logique floue. Par exemple, un opérateur de type « et » peut indiquer de prendre le minimum entre deux valeurs et un opérateur de type « ou » revient à prendre le maximum entre deux valeurs.

En référence à la figure 2, le jeu de senseurs sélectionné émet au moins un signal porteur d'au moins une information de pilotage.

Le procédé comporte alors une étape de génération STP3 avec le contrôleur de commande 20 d'au moins un signal de commande pour piloter l'aéronef 1, basé au moins sur chaque information de pilotage de ladite au moins une information de pilotage.

Par exemple, un signal de commande est transmis à au moins un contrôleur de vitesse électronique 8. A cet effet, le contrôleur de commande applique une ou plusieurs lois de pilotage fournissant le ou les signaux de commande en fonction notamment des informations de pilotage.

La figure 3 présente un exemple visant à illustrer l'invention.

Un aéronef 1 évolue dans l'air pour se poser sur une aire d'atterrissage 85. Le ciel est clair et ne voile pas la lumière émise par le soleil 90.

Par contre, un objet 95 de type immeuble se trouve à proximité de l'aire d'atterrissage 85. Par conséquent, l'espace aérien est partagée en deux zones, à savoir une zone éclairée ZON1 et une zone ombragée ZON2 située dans l'ombre de l'immeuble 95.

Selon cet exemple, le contrôleur de commande 20 utilise un système 36, 37, 38 de télédétection d'obstacle pour éviter les divers obstacles selon des lois de pilotage mémorisées.

Selon un exemple simple donné dans un but didactique; les paramètres de condition de vol comprennent l'éclairement uniquement.

Lorsque l'aéronef 1 se trouve au premier point PT1 par exemple, l'éclairement est de fait élevé. Le contrôleur de commande 20 utilise alors un jeu de senseurs mémorisé ayant un système 36, 37, 38 de télédétection d'obstacle peu sensible à la lumière, un système RADAR par exemple.

Par suite, le contrôleur de commande 20 applique par exemple un algorithme pour éviter des obstacles sur la base des mesures réalisées par le RADAR.

Par contre, lorsque l'aéronef 1 atteint le deuxième point PT2, le capteur d'éclairement détecte un faible éclairement, le contrôleur de commande 20 bascule alors sur un jeu de senseurs ayant un système 36, 37, 38 de télédétection d'obstacles fonctionnant dans la pénombre, par exemple un système sollicitant une caméra infrarouge.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de pilotage d'un aéronef (1) ayant une suite (30) de senseurs comprenant une pluralité de senseurs de navigation (31) dissimilaires,
**caractérisé en ce que** le procédé comporte une phase de pilotage comprenant les étapes suivantes :
- détermination (STP1) d'au moins un paramètre de condition de vol variant en fonction de conditions météorologiques, ledit au moins un paramètre de condition de vol étant distinct d'une information relative à une qualité d'une image,
- sélection (STP2) d'un jeu de senseurs (50) en fonction de chaque paramètre de condition de vol dudit au moins un paramètre de condition de vol selon un modèle de sélection embarqué dans ledit aéronef (1), ledit jeu de senseurs (50) comprenant au moins un senseur de navigation de ladite suite (30) de senseurs, ledit jeu de senseurs (50) générant au moins une information de pilotage
- génération (STP3) avec un contrôleur de commande (20) d'au moins un signal de commande pour piloter l'aéronef (1), basé au moins sur chaque information de pilotage de ladite au moins une information de pilotage.

2. Procédé selon la revendication 1,
**caractérisé en ce que** ladite détermination (STP1) d'au moins un paramètre de condition de vol comporte au moins une des étapes suivantes : mesure d'une luminance d'un environnement de l'aéronef (1), mesure d'un éclairement lumineux dudit environnement, mesure d'une intensité lumineuse dudit environnement, détermination d'un contraste d'un objet dudit environnement par rapport à un fond.

3. Procédé selon l'une quelconque des revendications 1 à 2, **caractérisé en ce que** ladite détermination (STP1) d'au moins un paramètre de condition de vol comporte les étapes suivantes : mesure d'un éclairement lumineux d'un environnement de l'aéronef (1), détermination d'un contraste dudit environnement par rapport à un fond, et mesure d'une distance entre l'aéronef (1) et un objet dudit environnement.

4. Procédé selon l'une quelconque des revendications 1 à 3,
caractérisé en ce ladite détermination (STP1) d'au moins un paramètre de condition de vol comporte une étape de détermination d'au moins un paramètre de vol de l'aéronef (1) ou de la position de l'aéronef (1), ladite sélection d'un jeu de senseurs étant réalisée en fonction dudit au moins un paramètre de vol ou de la position de l'aéronef (1).

5. Procédé selon la revendication 4,
**caractérisé en ce que** ledit au moins un paramètre de vol comporte une vitesse de déplacement de l'aéronef (1).

6. Procédé selon l'une quelconque des revendications 1 à 5,
**caractérisé en ce que** ledit modèle de sélection applique une étape de sélection par logique floue.

7. Procédé selon la revendication 6,
**caractérisé en ce que** ladite étape de sélection par logique floue comporte les étapes suivantes :
- détermination, pour chaque paramètre de condition de vol dudit au moins un paramètre de condition de vol, d'au moins un niveau d'appartenance à une catégorie associée à ce paramètre de condition de vol,
- détermination d'un niveau de pondération de chaque règle d'une pluralité de règles, chaque règle associant un ensemble de senseurs comprenant au moins un senseur de navigation de ladite suite de senseurs et au moins un niveau d'appartenance à une dite catégorie,
- détermination du jeu de senseurs, ledit jeu de senseurs étant l'ensemble de senseurs associé à la règle ayant le plus haut niveau de pondération.

8. Procédé selon l'une quelconque des revendications 1 à 7, **caractérisé en ce que** ledit au moins un paramètre de condition de vol étant mesuré par une pluralité de senseurs dissimilaires de ladite pluralité de senseurs de navigation, ladite détermination d'au moins un paramètre de condition de vol est réalisée en sollicitant le jeu de senseurs en vigueur.

9. Aéronef (1) muni d'une suite de senseurs ayant une pluralité de senseurs de navigation (31) dissimilaires,
**caractérisé en ce que** ledit aéronef (1) comporte un contrôleur de commande (20) configuré pour appliquer le procédé selon l'une quelconque des revendications 1 à 8.

10. Aéronef selon la revendication 9,
**caractérisé en ce que** ladite pluralité de senseurs de navigation comporte au moins un des organes suivants : une caméra (32) fonctionnant dans le domaine des fréquences visibles, une caméra (33) fonctionnant dans le domaine des fréquences infrarouges, un système (34, 35) de mesure d'une vitesse de l'aéronef par rapport à l'air, un système (36, 37, 38) de télédétection d'un obstacle, un système (39) de positionnement par ultrasons, un capteur d'éclairement lumineux (40).

11. Aéronef selon l'une quelconque des revendications 9 à 10, **caractérisé en ce que** ledit aéronef (1) comporte au moins un groupe motorisé (5), ledit au moins un groupe motorisé (5) comprenant au moins un moteur (7) mettant en rotation au moins un rotor (6), ledit contrôleur de commande (20) transmet ledit au moins un signal de commande à un contrôleur de vitesse électronique (8) dudit au moins un moteur (7).
